# EUROPÄISCHE PATENTANMELDUNG

(11) **EP 3 683 468 A1**
(43) Veröffentlichungstag der Anmeldung: **22.07.2020**
(21) Anmeldenummer: 19215842.6
(22) Anmeldetag: 12.12.2019
(51) Int. Cl.: F16D 65/56, B61H 15/00, F16D 55/224, B61H 5/00

(54) **VERSCHLEISSNACHSTELLER EINER KOMPAKT-BREMSZANGENEINHEIT, UND KOMPAKT-BREMSZANGENEINHEIT MIT EINEM VERSCHLEISSNACHSTELLER**

(30) Priorität: 18.01.2019 DE 102019101341
(71) Anmelder: KNORR-BREMSE Systeme für Schienenfahrzeuge GmbH, 80809 München (DE)
(72) Erfinder: PETTER, Thomas, 80336 München (DE); MATHIEU, Michael, 82178 Puchheim (DE); FUDERER, Erich, 82256 Fürstenfeldbruck (DE); KRAUS, Harry-Werner, 81825 München (DE)

(57) **Zusammenfassung**

Die Erfindung betrifft einen Verschleißnachsteller (7) einer Kompakt-Bremszangeneinheit (1), insbesondere für Schienenfahrzeuge, weist ein Nachstellergehäuse (8), ein Nachstellerjoch (9), einen Gewindetrieb mit einer Spindel und einer auf der Spindel verschraubbaren Druckmutter (28) auf. Der Verschleißnachsteller (7) ist als ein pneumatischer Verschleißnachsteller (7) ausgebildet und weist eine Steuerungseinrichtung (130) eines Nachstellzylinders (25) des Verschleißnachstellers (7) auf, wobei die Steuerungseinrichtung (130) eine Ventileinrichtung (13) umfasst.

Ein weiterer Aspekt der Erfindung betrifft eine Kompakt-Bremszangeneinheit (1) einer pneumatischen Scheibenbremse, insbesondere für Schienenfahrzeuge, aufweisend zwei Zangenhebel (2, 2'), einen Bremszylinder (2a), Bremsbeläge (3, 3') und einen Verschleißnachsteller (7). Der Verschleißnachsteller (7) der Kompakt-Bremszangeneinheit (1) ist als ein pneumatischer Verschleißnachsteller (7) mit einer Steuerungseinrichtung (130) ausgebildet, wobei die Steuerungseinrichtung (130) eine Ventileinrichtung (13) mit einem Einlassventil (33) und einem gesteuerten Auslassventil (34) aufweist, welche einen Nachstellzylinder (25) mit dem Druckmedium des Bremszylinders (5a) als Antrieb des Verschleißnachstellers (7) steuern.

## Beschreibung

Die Erfindung betrifft einen Verschleißnachsteller einer Kompakt-Bremszangeneinheit nach dem Oberbegriff des Anspruchs 1. Die Erfindung bezieht sich auch auf eine Kompakt-Bremszangeneinheit mit einem solchen Verschleißnachsteller.

In sogenannten Kompakt-Bremszangeneinheiten wird der Verschleiß der Bremsbeläge und der Bremsscheibe durch eine Verlängerung eines Verschleißnachstellers, der auch als Druckstangensteller bezeichnet wird, in der Bremszange automatisch ausgeglichen.

Bei angelegter Bremse muss der Verschleißnachsteller die Abstützkraft auf die Zangenhebel halten, welche als Reaktionskraft aus der Zuspannkraft auf die Bremsbeläge resultiert.

Der Ansteuermechanismus des Verschleißnachstellers und der Verschleißnachsteller selbst müssen so gestaltet sein, dass ein Lüftspiel, welches auch als Belagspiel benannt wird, unabhängig vom Verschleißzustand der Beläge und der Bremsscheibe eingestellt wird. Eine Querauslenkung der Zange aufgrund einer Achsquerverschiebung darf nicht zu einem ungewollten Nachstellen führen.

EP 0 699 846 B1 beschreibt ein Bremsgestänge für Fahrzeuge, insbesondere Schienenfahrzeuge, mit einem stangenartigen, automatischen Verschleißnachsteller, dessen Länge über einen Gewindetrieb verändert werden kann. Der Gewindetrieb beinhaltet ein Schraubgetriebe, das als Verschraubungsteile eine Gewindespindel und eine auf dieser verschraubbare Mutter aufweist. Da die Ansteuerung des Nachstellers nur einen begrenzten Betätigungsweg aufweist, wird das Gewinde mit einer großen Steigung ausgeführt. Das Gewinde ist deshalb nicht selbsthemmend. Die Gewindespindel ist über eine vorgespannte Stirnverzahnung (Ratschenkupplung) im Joch des Verschleißnachstellers gegen Verdrehen unter Axialkraft gesichert. Über einen Sechskant kann die Gewindespindel von außen manuell im lastfreien Zustand gedreht werden. Eine solche manuelle Verdrehung erfolgt in verkürzender Richtung zum Bremsbelagwechsel, in verlängernder Richtung zum anschließenden groben Einstellen des Belagspieles, d.h. des Lüftspiels.

Die Mutter ist drehbar auf einem mit dem Nachstellergehäuse verschraubten Rohr gelagert. Sie kann in verlängernder Richtung über eine Stellhülse mit Freilauf gedreht werden. Die Stellhülse besitzt eine Außenverzahnung, über die sie mittels eines geeigneten Antriebsteiles angetrieben werden kann. Eine Drehung der Mutter in verkürzender Richtung wird durch einen Schlingfedernfreilauf zwischen Mutter und Gehäuserohr verhindert.

EP 2 531 741 B1 bezieht sich auf einen Verschleißnachsteller mit gleichem Wirkprinzip wie oben angegeben, aber in einer anderen Anordnung. Der Verschleißnachsteller für eine Bremszange einer Scheibenbremse eines Schienenfahrzeugs umfasst ein Schraubgetriebe, welches als Verschraubungsteile eine Gewindespindel und eine auf dieser verschraubbare Mutter aufweist, wobei eines der Verschraubungsteile sowie ein Stellelement zum drehenden Antrieb dieses Verschraubungsteils in Verschleißnachstellrichtung in einem ersten Verschleißnachsteller-Gehäuse drehbar und das andere Verschraubungsteil in einem zweiten Verschleißnachsteller-Gehäuse drehfest gelagert ist, ein in Drehrichtung des drehbaren Verschraubungsteils entgegen einer Verschleißnachstellrichtung sperrenden und in umgekehrter Drehrichtung freilaufenden Schlingfederfreilauf, durch welchen das drehbare Verschraubungsteil mit einem drehfesten Teil koppelbar ist, wobei das drehfeste Teil unmittelbar durch das erste Verschleißnachsteller-Gehäuse gebildet wird. Eine Schlingfeder des Schlingfederfreilaufs wirkt einerseits mit einer radial äußeren, eine äußere Oberfläche des ersten Verschleißnachsteller-Gehäuses ausbildenden Wirkfläche und andererseits mit einer radial äußeren Wirkfläche des drehbaren Verschraubungsteils oder eines mit diesem mitdrehenden Elements reibschlüssig zusammen, wobei die Wirkfläche des ersten Verschleißnachsteller-Gehäuses an einem rohrförmigen, mit dem ersten Verschleißnachsteller-Gehäuse einstückigen Fortsatz ausgebildet ist.

EP 0 732 247 B1 beschreibt eine insbesondere für Schienenfahrzeuge mit querverschieblichen Radsätzen vorgesehene Scheibenbremse mit einer Bremszange, deren Zangenhebel einerseits an Bremsbacken, anderseits an einer sie verbindenden Stange mit integriertem Verschleißnachsteller und mittig an einem Bremskraftmotor bzw. einem diesen halternden Bremsengehäuse angekoppelt sind. Der Verschleißnachsteller weist einen Betätigungshebel auf, der mittels einer Steuerstange zur Verschleißnachstellerbetätigung drehbar ist. Die endseitigen Koppelstellen der Steuerstange, die in Abhängigkeit vom Hub des Bremskraftmotors verschieblich ist, liegen mit ihren Koppelachsen zumindest annähernd auf den bremsbackenfernen Drehachsen der Koppelstellen eines Zangenhebels. Durch diese Lage der Koppelstellen wird ein Betätigen des Verschleißnachstellers beim seitlichen Versetzen der Bremsscheibe des Radsatzes unabhängig vom Löse- bzw. Betätigungszustand der Scheibenbremse ausgeschlossen.

Das Funktionsprinzip der bekannten Verschleißnachsteller bewirkt einen vergleichsweise kleinen Nachstellhub während eines Bremsvorganges. Dieser reicht aus, um den während einer Bremsung auftretenden Verschleiß sicher nachzustellen. Als nachteilig wird angesehen, dass ein wesentlich zu großes Belagspiel, z.B. nach einem Belagwechsel, aber von Hand voreingestellt werden muss, damit die Bremse von Anfang an betriebsbereit ist.

Die Aufgabe der Erfindung besteht darin, einen verbesserten Verschleißnachsteller zu schaffen, mit welchem auch eine schnelle Nachstellung eines wesentlich zu großen Belagspieles - wie es z.B. nach den Belagwechsel vorhanden sein kann -mit ausreichender Stellgenauigkeit ermöglicht wird und welcher in Anschaffung und Wartung kostengünstig ist.

Eine weitere Aufgabe ist es, eine verbesserte Kompakt-Bremszangeneinheit bereitzustellen.

Die Aufgabe wird durch den Gegenstand des Anspruchs 1 gelöst.

Die weitere Aufgabe wird durch den Gegenstand des Anspruchs 18 gelöst.

Ein Erfindungsgedanke besteht darin, den Verschleißnachsteller anstelle über den Kolbenhub des Bremszylinders und einem mechanischen Getriebe zu betätigen, den Verschleißnachsteller direkt über den Bremsdruck gesteuert anzutreiben.

Ein erfindungsgemäßer Verschleißnachsteller einer Kompakt-Bremszangeneinheit, insbesondere für Schienenfahrzeuge, weist ein Nachstellergehäuse, ein Nachstellerjoch, einen Gewindetrieb mit einer Spindel und einer auf der Spindel verschraubbaren Druckmutter auf. Der Verschleißnachsteller ist als ein pneumatischer Verschleißnachsteller ausgebildet und weist eine Steuerungseinrichtung eines Nachstellzylinders des Verschleißnachstellers auf, wobei die Steuerungseinrichtung eine Ventileinrichtung umfasst.

Die Steuerungseinrichtung stellt vorteilhaft sicher, dass im pneumatischen Verschleißnachsteller beim Lösen der Bremse ein Druck aufrecht erhalten bleibt, der zum Nachstellen eines etwaigen Verschleißes ausreicht.

Eine erfindungsgemäße Kompakt-Bremszangeneinheit einer pneumatischen Scheibenbremse, insbesondere für Schienenfahrzeuge, umfasst zwei Zangenhebel, einen Bremszylinder, Bremsbeläge und einen Verschleißnachsteller. Der Verschleißnachsteller ist als ein pneumatischer Verschleißnachsteller mit einer Steuerungseinrichtung ausgebildet, wobei die Steuerungseinrichtung eine Ventileinrichtung mit einem Einlassventil und einem gesteuerten Auslassventil aufweist, welche einen Nachstellzylinder mit dem Druckmedium des Bremszylinders als Antrieb des Verschleißnachstellers steuern.

Als Druckmedium wird vorteilhaft der Bremsdruck eines Bremszylinders der Bremszangeneinheit verwendet, wodurch kein zusätzlicher Antrieb einschließlich einer Steuerung erforderlich ist.

In einer Ausführung umfasst die Ventileinrichtung ein Einlassventil für ein Druckmedium, vorzugsweise Druckluft, und ein gesteuertes Entlüftungsventil. Eine Aufteilung auf zwei Ventile ermöglicht so eine einfache Steuerung.

In besonders vorteilhafter Ausführung sind das Einlassventil und das gesteuerte Entlüftungsventil mit dem Druckmedium beaufschlagbar, wobei ein Druck des Druckmediums einen Steuerdruck für das gesteuerte Entlüftungsventil bildet. Eine Beeinflussung des Steuermediums ist vorteilhaft nicht erforderlich, da die Veränderung des Steuerdrucks im Zusammenspiel mit einer zuzuordnenden Bremszangeneinheit von der Bremsensteuerung zum Zuspannen und Lösen der Bremse erfolgt.

Eine Ausführung sieht vor, dass das Einlassventil als ein Rückschlagventil ausgebildet ist und einen Ventilhalter mit einem Nachstelleranschluss für das Druckmedium, ein Ventilelement und eine Ventilfeder aufweist. Das ergibt einen einfachen kompakten Aufbau.

In vorteilhaft platzsparender Weise ist das Einlassventil zwischen dem Nachstelleranschluss für das Druckmedium und einem Nachstellerdruckraum des Nachstellzylinders angeordnet.

Für eine vorteilhaft angepasste Bauart des Verschleißnachstellers für Bremszangeneinheiten kann zwischen dem Nachstellerdruckraum des Nachstellzylinders ein mit dem Nachstellerdruckraum kommunizierender Druckraum angeordnet sein, welcher mit dem Einlassventil kommuniziert.

In einer weiteren Ausführung kommuniziert der Nachstelleranschluss mit einem Kanal, welcher sich längs durch den ganzen Ventilhalter des Einlassventils erstreckt, wobei der Kanal mit einer umlaufenden Nut des Ventilhalters kommuniziert und in einen Ventilsitz des Einlassventils mündet. Der Ventilhalter beinhaltet somit vorteilhaft mehrere Funktionen, nämlich eine Halterung des Ventils, Anschluss einer Druckleitung, Zuleitung des Druckmediums zum Ventil und Abzweigung einer Steuerleitung für das gesteuerte Entlüftungsventil.

Eine noch weitere Ausführung sieht vor, dass das Entlüftungsventil einen Ventilhalter mit einem Kanal und einer umlaufenden Nut, ein Membranelement, eine Ventilfeder und einen Düsenkörper umfasst. Dies ergibt ein vorteilhaft kompaktes gesteuertes Ventil.

Es ist weiterhin von Vorteil, wenn der Kanal und die umlaufende Nut des Ventilhalters des Entlüftungsventils miteinander kommunizieren und mit dem Membranelement zusammenwirken, wobei der Kanal und die umlaufende Nut einen Steuereingang des gesteuerten Entlüftungsventils bilden. Auch dieser Ventilhalter beinhaltet somit vorteilhaft mehrere Funktionen, nämlich eine Halterung des Ventils, Anschluss einer Steuerleitung für das gesteuerte Entlüftungsventil.

In einer weiteren Ausführung kommuniziert die umlaufende Nut des Ventilhalters des Entlüftungsventils als Steuereingang des Entlüftungsventils mit der umlaufenden Nut und mit dem Kanal des Ventilhalters. Dies kann z.B. mittels einer Verbindungsleitung ausgeführt sein, die entweder separat angeschlossen werden kann oder in einem gemeinsamen kompakten Gehäuse zwischen den beiden Ventilhaltern eingeformt ist.

In einer noch weiteren Ausführung umfasst das Membranelement einen umlaufenden Außenrand, einen damit elastisch verbundenen zentralen Membranabschnitt, einen auf dem zentralen Membranabschnitt wirkenden Halter, und ein in dem Halter zentral angeordnetes Ventilelement, wobei der Halter und das Ventilelement des Membranelementes in einem Ventilraum angeordnet sind, in welchem sie aufgrund des elastischen Membranabschnitts axial verschiebbar sind. Damit wird ein platzsparender und kompakter Aufbau für den Steuerungsteil des gesteuerten Entlüftungsventils ermöglicht. Ventilhalter und Membranelement können zusammen z.B. in einer Bohrung eines Gehäuses angeordnet werden.

Eine Rückstellung der Verschiebung des Membranelementes in eine geöffnete Stellung des Entlüftungsventils kann in vorteilhaft einfacher Weise dadurch ermöglicht werden, indem das Membranelement axial durch die Ventilfeder in Richtung auf den Ventilhalter vorgespannt ist.

Besonders vorteilhaft ist es für eine platzsparenden Aufbau, wenn der Ventilraum über den Düsenkörper und einen Entlüftungskanal mit dem Druckraum und über eine Entlüftungsöffnung mit der Atmosphäre kommuniziert, wenn das Entlüftungsventil geöffnet ist, wobei eine Kommunikation von Druckraum mit dem Ventilraum und somit mit der Atmosphäre unterbunden ist, wenn das Entlüftungsventil geschlossen ist. Eine weitere Ausführung sieht vor, dass der Düsenkörper in den Entlüftungskanal eingesetzt ist und einen Düsenkanal, der mit dem Druckraum kommuniziert, und eine Düsenöffnung aufweist, wobei das Dichtelement des Membranelementes mit der Düsenöffnung des Düsenkörpers derart zusammenwirkt, dass die Düsenöffnung durch das Dichtelement des Membranelementes verschlossen ist, wenn das Entlüftungsventil geschlossen ist, und dass die Düsenöffnung mit dem Ventilraum kommuniziert, wenn das Entlüftungsventil geöffnet ist. Hierbei ist es von besonderem Vorteil, dass eine Entlüftungsströmung durch den Düsenkörper und die Düsenöffnung beeinflussbar ist. Dadurch ist eine vorher festlegbare Entlüftungsdauer möglich.

Ein weiterer Vorteil besteht darin, dass das gesteuerte Ventil so mittels des gesteuerten Membranelementes so ausgeführt sein kann, dass der Druckverlauf in dem Druckraum des Nachstellzylinders des Verschleißnachstellers zeitlich versetzt zum Druckverlauf im Bremszylinder der zuzuordnenden Bremszangeneinheit erfolgt. Erst wenn der Druck im Bremszylinder einen unteren Grenzwert unterschreitet, wird der Druckraum des Nachstellzylinders komplett zur Atmosphäre entlüftet. Die Zeit dieses Entlüftens kann ebenfalls durch den Düsenkörper beeinflusst werden.

Für einen vorteilhaft platzsparenden und kompakten Aufbau kann die Ventileinrichtung in einem Ventilabschnitt des Nachstellergehäuses angeordnet sein.

Alternativ kann die Ventileinrichtung als separate Baugruppe außerhalb des Nachstellergehäuses in der Nachstellerdruckleitung angeordnet sein. Das ist beispielsweise für eine einfache Wartung vorteilhaft.

Es ist vorteilhaft, wenn der Nachstellzylinder mit dem gleichen Druckmedium beaufschlagbar ist, mit dem ein Bremszylinder einer Bremszangeneinheit, welcher der Verschleißnachsteller zuzuordnen ist, beaufschlagt ist, da auf diese Weise Installationsarbeiten der Zuleitungen reduziert werden können.

In einer anderen Ausführung ist der Verschleißnachsteller weiterhin mit einem Rückhubbegrenzer ausgebildet, wodurch sich der Vorteil ergibt, dass der Verschleißnachsteller eine Funktion als so genannter "Sprungsteller" aufweist.

In einer besonders bevorzugten Ausführung der Kompakt-Bremszangeneinheit ist diese mit dem oben beschriebenen Verschleißnachsteller ausgerüstet.

Ein Ausführungsbeispiel der Erfindung wird nachfolgend anhand der beigefügten Zeichnungen beschrieben.

Es zeigen:
- Figur 1: eine schematische Draufsicht eines Ausführungsbeispiels einer erfindungsgemäßen Kompakt-Bremszangeneinheit mit einem erfindungsgemäßen Verschleißnachsteller;
- Figur 2: eine Teilschnittansicht des Ausführungsbeispiels nach Figur 1;
- Figur 3: eine Seitenansicht des Ausführungsbeispiels nach Figur 1;
- Figur 4: eine Ansicht des Ausführungsbeispiels nach Figur 3 in Richtung einer Ansicht A;
- Figur 5: eine schematische Perspektivansicht des erfindungsgemäßen Verschleißnachstellers;
- Figur 6: eine schematische Längsschnittansicht des erfindungsgemäßen Verschleißnachstellers nach Figur 5;
- Figur 7: eine Teilschnittansicht des erfindungsgemäßen Verschleißnachstellers in Richtung einer Ansicht U nach Figur 6, und
- Figur 8-10: vergrößerte Schnittansichten einer Ventileinrichtung gemäß Ausschnitten VIII, IX und X nach Figur 7 in verschiedenen Zuständen.

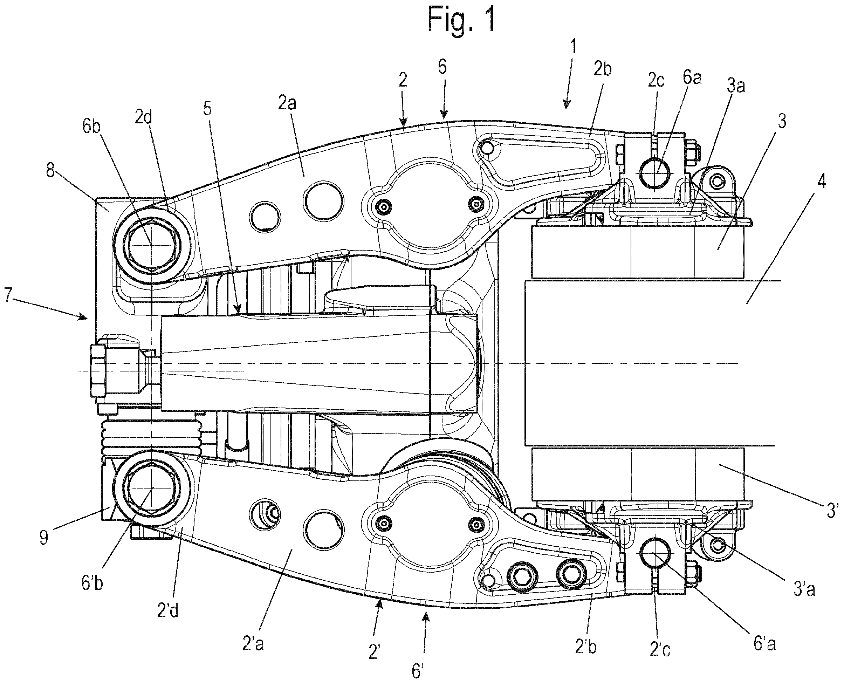

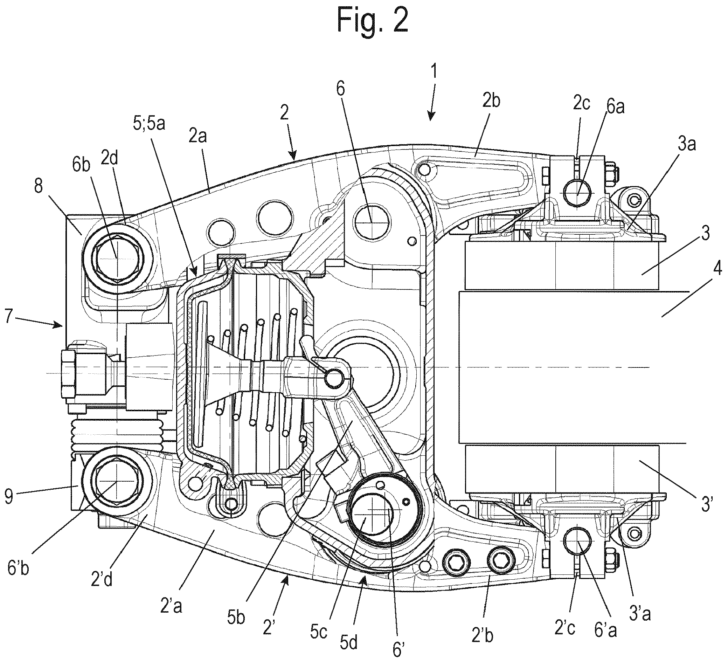

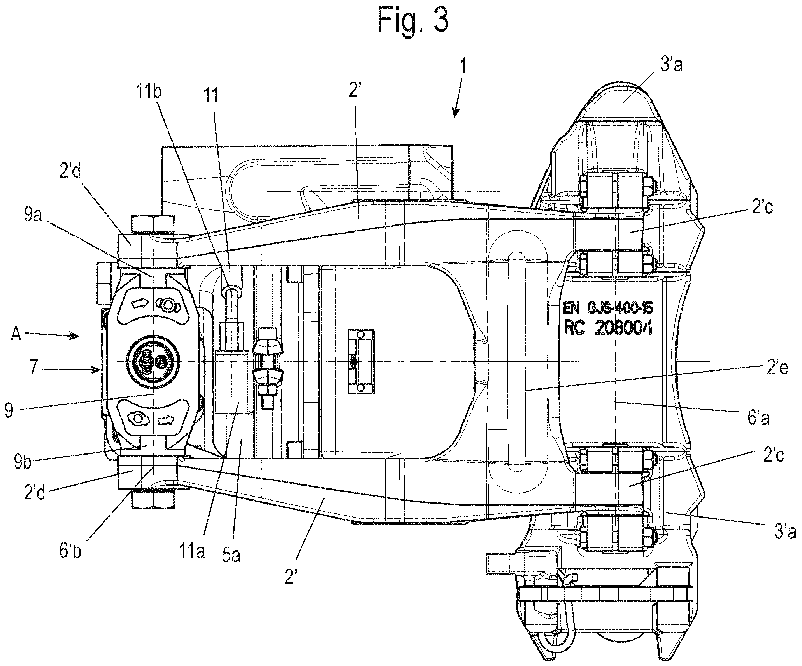

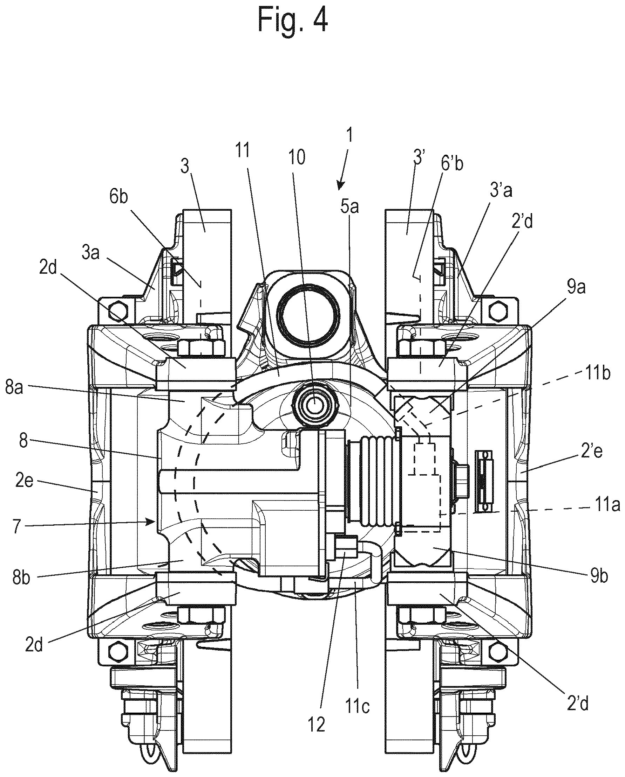

**Figur 1** zeigt eine schematische Draufsicht eines Ausführungsbeispiels einer erfindungsgemäßen Kompakt-Bremszangeneinheit 1 mit einem erfindungsgemäßen Verschleißnachsteller 7. In **Figur 2** ist eine Teilschnittansicht des Ausführungsbeispiels nach Figur 1 gezeigt. **Figur 3** stellt eine Seitenansicht des Ausführungsbeispiels nach Figur 1 dar, und **Figur 4** zeigt eine Ansicht des Ausführungsbeispiels nach Figur 3 in Richtung einer Ansicht A.

Die Kompakt-Bremszangeneinheit 1 bildet eine Scheibenbremse mit Bremsbelägen 3, 3' und einer Bremsscheibe 4 für ein Schienenfahrzeug und umfasst zwei Zangenhebel 2, 2', die doppelwangig ausgebildet sind. Die doppelwangigen Zangenhebel 2, 2' weisen jeweils in zwei Horizontalebenen jeweils zwei in einer Hebelschwenkachse 6, 6' untereinander verbundene Hebelabschnitte 2a, 2b auf. Diese wiederum sind durch einen vertikalen Verbinder 2e, 2'e untereinander verbunden (siehe Figur 3 und 4).

Jeder Hebelabschnitt 2a, 2'a; 2b, 2'b weist jeweils ein freies Hebelende 2c, 2'c; 2d, 2'd auf. So sind erste Hebelenden 2c, 2'c jeweils mit einem Bremsbelaghalter 3a, 3'a eines jeweiligen Bremsbelags 3, 3' gelenkig in Schwenkachsen 6a, 6'a gekoppelt. Die Bremsbeläge 3, sind beidseitig der Bremsscheibe 4 angeordnet und liegen parallel zu einer gedachten vertikalen Mittelebene der Bremsscheibe 4. Durch diese gedachte Mittelebene verläuft eine gedachte Längsachse der Kompakt-Bremszangeneinheit 1.

Die zweiten Hebelenden 2d, 2'd sind mit dem Verschleißnachsteller 7, der auch als Druckstangensteller bezeichnet wird, über Schwenkachsen 6b, 6'b gelenkig verbunden. Der Verschleißnachsteller 7 weist ein Nachstellergehäuse 8 und ein Nachstellerjoch 9 auf. Dabei ist das Nachstellergehäuse 8 mit Befestigungsabschnitten 8a und 8b vertikal zwischen den zweiten Hebelenden 2d angeordnet. Zwischen den anderen beiden Hebelenden 2'd ist das Nachstellerjoch 9 mit seinen Befestigungsabschnitten 9a und 9b angebracht. Der Verschleißnachsteller 7 wird unten noch im Detail beschrieben.

Zwischen den beiden doppelwangigen Hebeln 2, 2' ist ein Krafterzeuger 5 in einem Bereich zwischen dem Verschleißnachsteller 7 und einem nicht bezeichneten zentralen Bremsenkörper angeordnet. Der Krafterzeuger 5 weist einen Bremszylinder 5a auf, welcher mit einem Antriebsarm 5b gekoppelt ist. Der Antriebsarm 5b wirkt mit einem Bolzen 5c als Exzenterantrieb 5d für die Bremszangeneinheit 1 zusammen.

Der eine Zangenhebel 2 ist um eine zugehörige Hebelschwenkachse 6 an dem nicht näher bezeichneten Bremsenkörper verschwenkbar angebracht. Der andere Zangenhebel 2' ist über den Bolzen 5c, der seinerseits um eine Schwenkachse 6' an dem Bremsenkörper verschwenkbar angelenkt ist, verschwenkbar angebracht. Auf diese Weise ist der Krafterzeuger 5 mit dem anderen Hebelarm 2' gekoppelt und bildet den Bremsenantrieb.

Die Schwenkachsen 6, 6'; 6a, 6'a; 6b, 6'b verlaufen vertikal parallel zueinander.

Der Bremszylinder 5a ist ein pneumatischer Bremszylinder und besitzt einen Druckleitungsanschluss 10, wie in Figur 4 gezeigt ist.

Der erfindungsgemäße Verschleißnachsteller 7 wird wie der Bremszylinder 5a mit einem Druckmedium, das hier Druckluft ist, beaufschlagt. Der Verschleißnachsteller 7 ist somit ein pneumatischer Verschleißnachsteller 7 und wird wie der Bremszylinder 5a durch das Druckmedium angetrieben.

Dazu ist eine Nachstellerdruckleitung 11 vorgesehen, welche an einem Bremszylinderanschluss 11a über eine Verbindung 11b angeschlossen ist und mit einem Nachstelleranschluss 12 des Verschleißnachstellers 7 über eine weitere Verbindung 11c verbunden ist. Dies ist in Figur 3 und 4 dargestellt.

Der Verschleißnachsteller 7 ist so über die Nachstellerdruckleitung 11, welche hier eine flexible Druckleitung (Schlauchleitung) ist, mit dem Bremszylinder 5a verbunden. Auf diese Weise wird der Verschleißnachsteller 7 gleichzeitig mit dem Bremszylinder 5a mit Bremsdruck versorgt. Die Nachstellerdruckleitung 11 ist als Schlauchleitung so verlegt, dass sich der Verschleißnachsteller 7 relativ zum Bremszylinder 5a frei bewegen kann. Der Verschleißnachsteller 7 verlängert sich aufgrund von Verschleißnachstellung. Verschiebungen aus der Achskinematik treten ebenfalls auf.

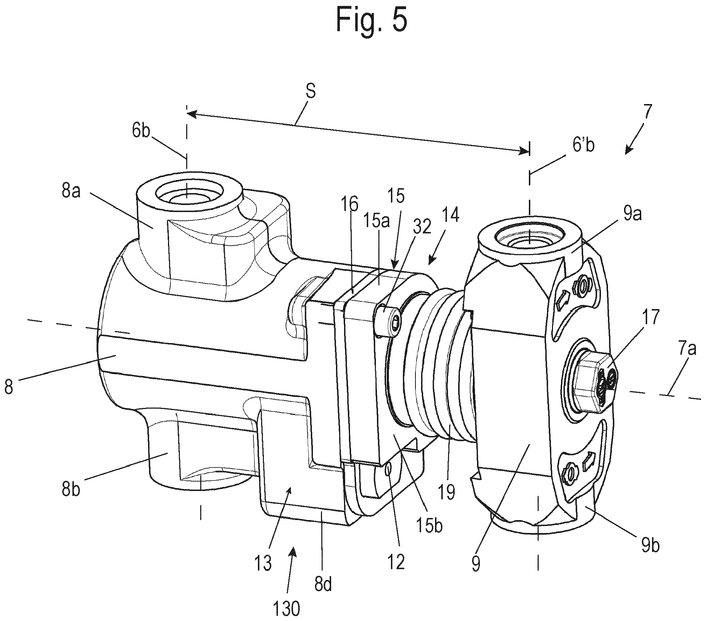

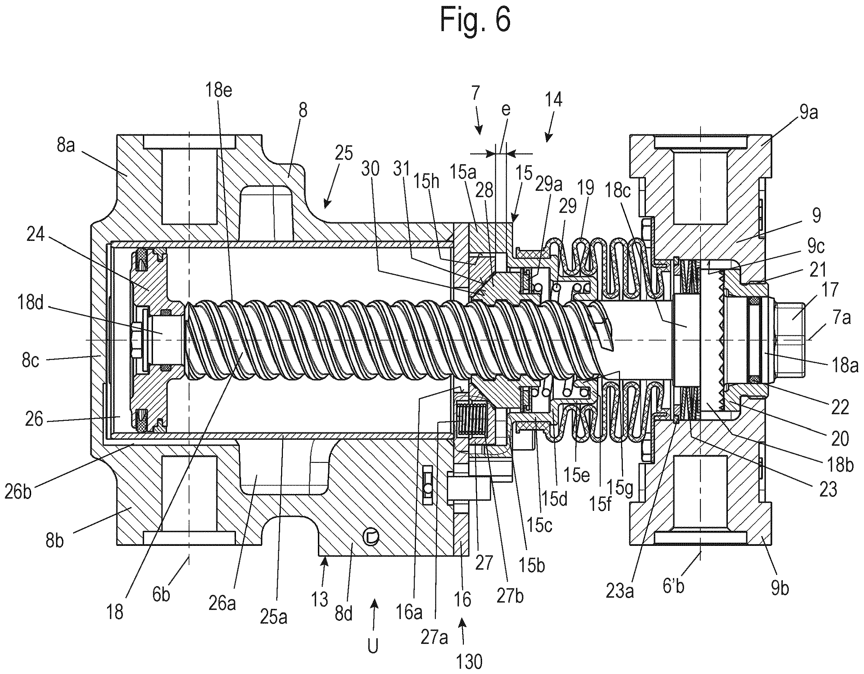

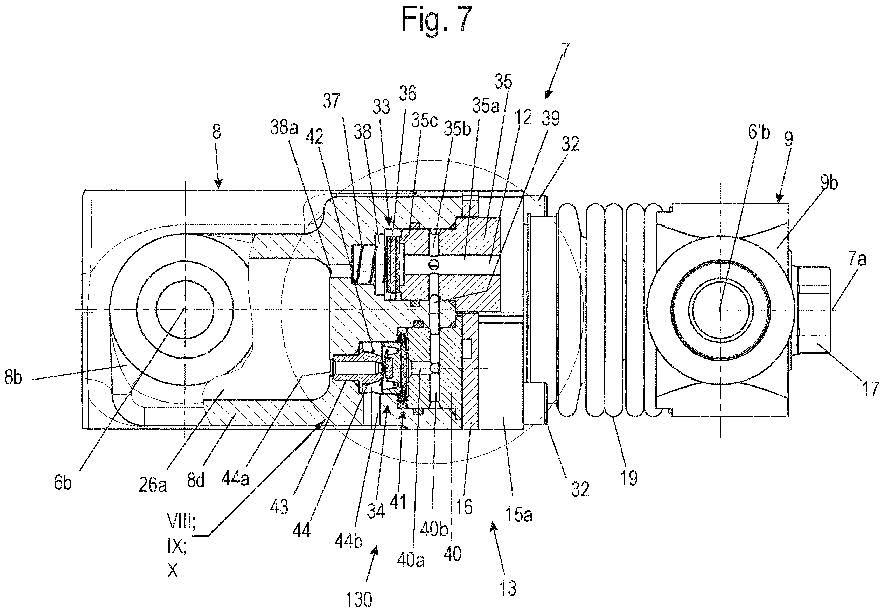

**Figur 5** zeigt eine schematische Perspektivansicht des erfindungsgemäßen Verschleißnachstellers 7. **Figur 6** stellt eine schematische Längsschnittansicht des erfindungsgemäßen Verschleißnachstellers 7 nach Figur 5 dar. In **Figur 7** ist eine Teilschnittansicht des erfindungsgemäßen Verschleißnachstellers in Richtung einer Ansicht U nach Figur 6 gezeigt.

Der pneumatische Verschleißnachsteller 7 stellt einen Abstand S zwischen den Schwenkachsen 6b, 6'b der Hebelenden 2d, 2'd der Zangenhebel 2 in Abhängigkeit von einem Verschleiß von Bremsbelag 3, 3' und Bremsscheibe 4. Damit wird auch gleichzeitig ein Lüftspiel zwischen Bremsbelag 3, 3' und Bremsscheibe 4 eingestellt, wobei der Verschleißnachsteller 7 immer ein kontinuierlich gleichgroßes Lüftspiel einstellt.

Der pneumatische Verschleißnachsteller 7 für Kompakt-Bremszangeneinheiten 1 umfasst das Nachstellergehäuse 8, das Nachstellerjoch 9, eine Spindel 18 und weiterhin drei Grundelemente, nämlich einen Nachstellzylinder 25, einen Rückhubbegrenzer 14 und eine Steuerungseinrichtung 130 mit einer Ventileinrichtung 13.

Der Nachstellzylinder 25 und die Ventileinrichtung 13 sind in dem Nachstellergehäuse 8 angeordnet. In einer nicht gezeigten, aber leicht vorstellbaren Ausführung ist es auch möglich, dass die Ventileinrichtung 13 als separate Baugruppe außerhalb des Nachstellergehäuses 8 in der Nachstellerdruckleitung 11 angeordnet ist. Der Rückhubbegrenzer 14 ist zwischen dem Nachstellergehäuse 8 und dem Nachstellerjoch 9 in einem Rückhubbegrenzergehäuse 15 in Zusammenwirkung mit der Spindel 18 und weiteren Bauteilen, die unten noch beschrieben werden, angeordnet.

Die Spindel 18 erstreckt sich durch den Verschleißnachsteller 7 längs seiner Nachstellerachse 7a. Dabei ist ein Rückstellende 18a der Spindel 18 in dem Nachstellerjoch 9 gelagert. Dies wird unten noch näher beschrieben. Das andere Ende der Spindel 18 ist als ein Kolbenende 18d mit dem Nachstellkolben 24 in nicht näher beschriebener Weise in axialer Richtung fest aber drehbar verbunden und über den Nachstellkolben 24 in dem Nachstellzylinder 25 in dem Nachstellergehäuse 8 gelagert.

Das Nachstellergehäuse 8 weist den Nachstellzylinder 25 auf, dessen Längsachse in der Nachstellerachse 7a verläuft. Die Schwenkachse 6b ist rechtwinklig zu der Nachstellerachse 7a angeordnet und verläuft durch die Befestigungsabschnitte 8a, 8b des Nachstellergehäuses 8. Mittels der Befestigungsabschnitte 8a, 8b ist das Nachstellergehäuse 8 mit den Hebelenden 2d des einen doppelwangigen Zangenhebels 2 gekoppelt (siehe Figuren 1, 2, 4).

Der Nachstellzylinder 25 erstreckt sich von einer Stirnwand 8c des Nachstellergehäuses 8, welche zwischen den Befestigungsabschnitten 8a, 8b angeordnet ist, bis zu dem gegenüberliegenden, offenen Ende des Nachstellergehäuses 8. In den Nachstellzylinder 25 ist eine Zylinderlaufbuchse 25a eingesetzt, in welcher der Nachstellkolben 24 in Längsrichtung in der Nachstellerachse 7a verschiebbar angeordnet ist. Der Nachstellzylinder 25 wandelt mittels des Nachstellkolbens 24 den aktuellen Bremsdruck in eine ausreichend hohe Nachstellkraft um.

Der Nachstellkolben 24 weist einen Hub auf, der zu Nachstellung des gesamten Verschleißes von Bremsbelägen 3, 3' und Bremsscheibe 4 der Kompakt-Bremszangeneinheit 1 ausreicht.

Die Zylinderlaufbuchse 25, die Innenseite der Stirnwand 8c und der Nachstellkolben 24 legen einen Raum fest, der als Nachstellerdruckraum 26 bezeichnet und als Druckvolumen genutzt wird. Durch die Bewegung des Nachstellerkolbens 24 ist das Volumen des Nachstellerdruckraums 26 variabel. Der Nachstellerdruckraum 26 kommuniziert mit einem weiteren, unveränderlichen Druckraum 26a über eine Verbindung 26b. Der weitere Druckraum 26a und die Verbindung 26b sind in dem Nachstellergehäuse 8 eingeformt.

Der Druckraum 26a ist über ein Rückschlagventil 33 (Figur 7) mit dem Nachstelleranschluss 12 (Figur 5 und 7) verbunden. Der Nachstelleranschluss 12 ist über die flexible Nachstellerdruckleitung 11 (Schlauchleitung) an einen nicht gezeigten Druckraum bzw. Verbindung zu dem Druckanschluss des Bremszylinders 5a angeschlossen, wie in Figur 3 und 4 dargestellt ist. Auf diese Weise wird der Verschleißnachsteller 7 gleichzeitig mit dem Bremszylinder 5a mit Bremsdruck versorgt.

Der Nachstellkolben 24 wirkt auf die Spindel 18, die im Nachstellerjoch 9 gegen eine Rückstellverzahnung 18b in einer zentralen Ausnehmung 9c des Nachstellerjochs 9 drehbar gelagert ist. Die Rückstellverzahnung 18b steht mit einer mit ihr korrespondierenden Verzahnung einer Stirnseite einer Lagerbuchse 20 in Eingriff. Diese Lagerbuchse 10 ist zentral in dem Nachstellerjoch 9 in einer Bohrung 21 eingesetzt und in nicht näher beschriebener Weise verdrehsicher befestigt. Das Rückstellende 18a der Spindel 18 erstreckt sich durch eine Bohrung der Lagerbuchse 19 und ist gegenüber dieser mittels einer Dichtung 22, z.B. ein O-Ring, abgedichtet. Der von dem Nachstellerjoch 9 hervorstehende Endabschnitt des Rückstellendes 18a der Spindel 18 ist mit einem Rückstellsechskant 17 versehen.

Die Rückstellverzahnung 18b ist mit der Spindel 18 drehfest verbunden, z.B. einstückig mit der Spindel 18 ausgebildet, und geht in Richtung zum Nachstellergehäuse 8 weisend in einen Wellenabschnitt 18c über, auf dem eine Axialfeder 23, hier als Tellerfeder ausgebildet, angeordnet ist. Die Axialfeder 23 stützt sich an der Rückstellverzahnung 19 und an einem Axialsicherungsring 23a in der Ausnehmung 9c des Nachstellerjochs 9 ab. Auf diese Weise wirkt eine Axialkraft der Axialfeder 23 auf die Rückstellverzahnung 18b und drückt diese zusammen mit der Spindel 18 mit einer bestimmten Vorspannung gegen die ortsfeste Lagerbuchse 20. Daraus ergibt sich eine Verdrehsicherung der Spindel 18 bis zu einem bestimmten Drehmoment.

Wenn eine Axialkraft, die durch eine Zuspannung der Bremszangeneinheit 1 mittels des Bremszylinders 5a über die Befestigungsabschnitte 8a, 8b des Nachstellergehäuses 8 und die Befestigungsabschnitte 9a, 9b des Nachstellerjochs 9 von beiden Seiten auf die Spindel 18 wirkt, ist die Spindel 18 dadurch über die Rückstellverzahnung 18b und die Lagerbuchse 20 zusätzlich zu der Kraft der Axialfeder 23 verdrehgesichert. Dabei wird in diesem Zustand der zugespannten Bremszangeneinheit 1 diese Axialkraft über das Nachstellerjoch 9, die Lagerbuchse 20 und die Rückstellverzahnung 18b in das Rückstellende 18a der Spindel 18 eingeleitet. Auf der anderen Seite der Spindel 18 wird diese Axialkraft durch das Nachstellergehäuse 8 über die Zwischenplatte 16, den Zahnring 27 und die Druckmutter 28 auf die Spindel 18 übertragen. Dabei wird das durch die auf das nichtselbsthemmende Außengewinde 18e der Spindel 18 wirkende Axialkraft entstehende und auf die Druckmutter 28 wirkende Drehmoment über den Zahnring 27 im Rückhubbegrenzergehäuse 15 abgestützt. Auf diese Weise wird die Spindel 18 von ihren beiden Enden 18a, 18c her mit der durch die zugespannte Bremse erzeugten Axialkraft beaufschlagt.

Wenn diese durch die Zuspannung der Bremszangeneinheit 1 bewirkte Axialkraft bei gelöster Bremszangeneinheit 1 nicht auftritt, kann die Spindel 18 bei Bedarf, z.B. bei Bremsbelagwechsel, mittels Werkzeug über den Rückstellsechskant 17 ratschend verdreht werden. Mit anderen Worten, ein Eingriff der Rückstellverzahnung 18b mit der Lagerbuchse 20 bildet in diesem Fall mit der Vorspannung der Axialfeder 23 einen Ratschenmechanismus.

Der Rückhubbegrenzer 14 umfasst ein Rückhubbegrenzergehäuse 15, eine Zwischenplatte 16, einen Zahnring 27, mindestens eine Feder 27a, eine Druckmutter 28 und eine Druckfeder 29.

Der Rückhubbegrenzer 15 verhindert eine Verkürzung des Verschleißnachstellers 7 unter Bremskraft in Richtung der Nachstellerachse 7a und gewährleistet, dass sich der Verschleißnachsteller 7 nur dann in Richtung der Nachstellerachse 7a verlängert (nachstellt), wenn sich das Lüftspiel zwischen Bremsbelägen 3, 3 und Bremsscheibe 4 vergrößert.

Das Rückhubbegrenzergehäuse 15 weist eine Basis 15a in Form einer Platte mit teilweise gerundeten Ecken und mit einer Ausnehmung 15h auf. Die Ausnehmung 15h wird in Richtung auf das Nachstellergehäuse 8 bei Montage mit der Zwischenplatte 16 bis auf eine Durchgangsbohrung 16a für die Spindel 18 verschlossen. Auf der anderen zum Nachstellerjoch 9 weisenden Seite ist die Basis 15a mit einem ersten Stirnwandring 15b versehen, auf welcher ein erster hohlzylinderförmiger Gehäuseabschnitt 15c angebracht ist, der wiederum an seinem zum Nachstellerjoch 9 weisenden Ende in einen zweiten Stirnwandring 15d mit einem daran angebrachten zweiten, ebenfalls hohlzylinderförmigen Gehäuseabschnitt 15e übergeht. Ein Außendurchmesser des zweiten Gehäuseabschnitts15e ist kleiner als ein Außendurchmesser des ersten Gehäuseabschnitts 15c. Der Außendurchmesser des ersten Gehäuseabschnitts 15c ist kleiner als ein Innendurchmesser der Ausnehmung 15h der Basis 15a.

An dem zum Nachstellerjoch 9 weisenden Ende des zweiten Gehäuseabschnitts 15e ist ein dritter Stirnwandring 15f angeformt, dessen Rand nach innen in den zweiten Gehäuseabschnitt 15e hinein um 90° umgebogen bzw. umgekantet ist und einen umlaufenden hohlzylinderförmigen Kragen 15g bildet, der sich etwa über die halbe Länge des zweiten Gehäuseabschnitts 15e in Richtung der Nachstellerachse 7a erstreckt. Durch die so durch den umlaufenden hohlzylinderförmigen Kragen 15g gebildeten zentralen Durchgangsöffnung erstreckt sich die Spindel 18.

Die Zwischenplatte 16 ist an der Seite des Nachstellergehäuses 8 zwischen diesem und der Basis 15a des Rückhubbegrenzergehäuses 15 angeordnet. Das Rückhubbegrenzergehäuse 15 und die Zwischenplatte 16 sind hier mittels Befestigungselemente 32, z.B. Schrauben, zusammen an dem Nachstellergehäuse 8 dicht befestigt.

Die Zwischenplatte 16 verschließt sowohl die Öffnung des Nachstellzylinders 25 bis auf die Durchgangsbohrung 16a, durch welche sich die Spindel 18 erstreckt, als auch die Ausnehmung 15h der Basis 15a des Rückhubbegrenzergehäuses 15. Zudem weist die Zwischenplatte 16 eine nicht bezeichnete Aufnahme für die mindestens eine Feder 27a zur Halterung und Abstützung auf.

Der Zahnring 27 steht mit einer planen Seite mit der Zwischenplatte 16 in Kontakt. An der anderen Seite ist der Zahnring 27 mit einem Innenkonus mit einer Verzahnung 30 versehen. Die Verzahnung 30 steht mit einer zu ihr korrespondierenden Verzahnung 31 der Druckmutter 28 in Eingriff. Die Druckmutter 28 ist mit einem Innengewinde versehen, welches mit einem Außengewinde 18e der Spindel 18 in Eingriff steht, die sich durch die Druckmutter 28 und weiter durch die Gehäuseabschnitte 15b, 15c des Rückhubbegrenzergehäuses 15 in das Nachstellerjoch 9 wie oben beschrieben erstreckt. Die Druckmutter 28 weist auf ihrer zu dem Nachstellerjoch 9 weisenden Seite einen Absatz auf, auf dem ein Axiallager 29a angeordnet ist und über das sich die Druckfeder 29 mit einem Ende abstützt. Die Druckfeder 29 erstreckt sich zu einem Teil durch den ersten Gehäuseabschnitt 15c und dann durch den zweiten Gehäuseabschnitt 15e des Rückhubbegrenzergehäuses 15, wobei sich das andere Ende der Druckfeder 29 an dem dritten Stirnwandring 15f abstützt und zwischen dem umgebogenen Kragen 15g und der Innenseite des zweiten Gehäuseabschnitts 15e des Rückhubbegrenzergehäuses 15 angeordnet ist.

Der Zahnring 27 ist in der Ausnehmung 15h der Basis 15a des Rückhubbegrenzergehäuses 15 drehsicher aber verschiebbar gelagert. Eine Verschiebbarkeit des Zahnrings 27 längs der Nachstellerachse 7a ist zum Einen auf der Seite, die zum Nachstellgehäuses 8 weist, durch die Zwischenplatte 16 und zum Anderen auf der anderen Seite durch den ersten Stirnwandring 15b begrenzt. Ein Abstand der Seite des Zahnrings 27, welche zum Nachstellerjoch 9 weist, zu der Innenseite des ersten Stirnwandrings 15b wird als Einstellmaß "e" bezeichnet.

Mittels axialer Federkraft der mindestens einen Feder 27a, die in der Zwischenplatte 16 mit einem Ende aufgenommen und abgestützt ist, wird der Zahnring 27 gegen die Druckmutter 28 gedrückt. Die Feder 27a ist mit dem anderen Ende in einer Aufnahme 27b des Zahnrings 27 aufgenommen. Hier ist nur eine Feder 27a gezeigt, es ist natürlich möglich, dass mehrere Federn 27a am Umfang des Zahnrings 27 verteilt vorgesehen sind. Die Druckmutter 28 wiederum wird mittels der (stärkeren) Druckfeder 29 über den Zahnring 27 auf Anlage an der Zwischenplatte 16 gedrückt. Die axiale Kraft der Druckfeder 29 wirkt entgegengesetzt zu der axialen Kraft der mindestens einen Feder 27a.

Ein Faltenbalg 19 ist mit einem ersten Ende an dem ersten Gehäuseabschnitt 15c des Rückhubbegrenzergehäuses 15 befestigt und erstreckt sich über und um den zweiten Gehäuseabschnitt 15e, einen Abschnitt der Spindel 18 bis in die Ausnehmung 9c des Nachstellerjochs 9, an welchen der Faltenbalg 19 mit seinem anderen Ende in nicht näher beschriebener Weise befestigt ist. Der Faltenbalg 19 schützt und dichtet auf diese Weise das Rückhubbegrenzergehäuse 15, die Spindel 18 und deren Lagerung in der Ausnehmung 9c des Nachstellerjochs 9.

Die Ventileinrichtung 13 der Steuerungseinrichtung 130 ist in einem Ventilabschnitt 8d des Nachstellergehäuses 8 angeordnet. **Figur** 7 zeigt dies in einer Ansicht U in einer Teilschnittdarstellung des Nachstellergehäuses 8.

Die Ventileinrichtung 13 der Steuerungseinrichtung 130 umfasst ein Einlassventil 33 mit Rückschlagfunktion und ein gesteuertes Entlüftungsventil 34.

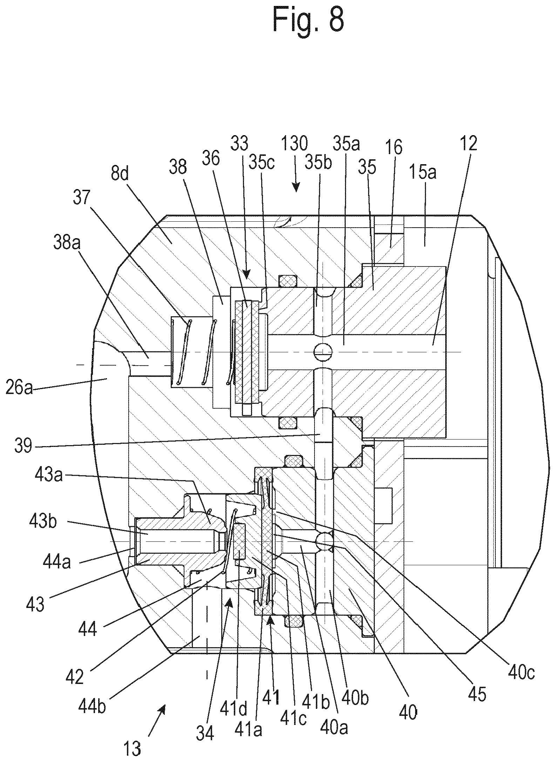

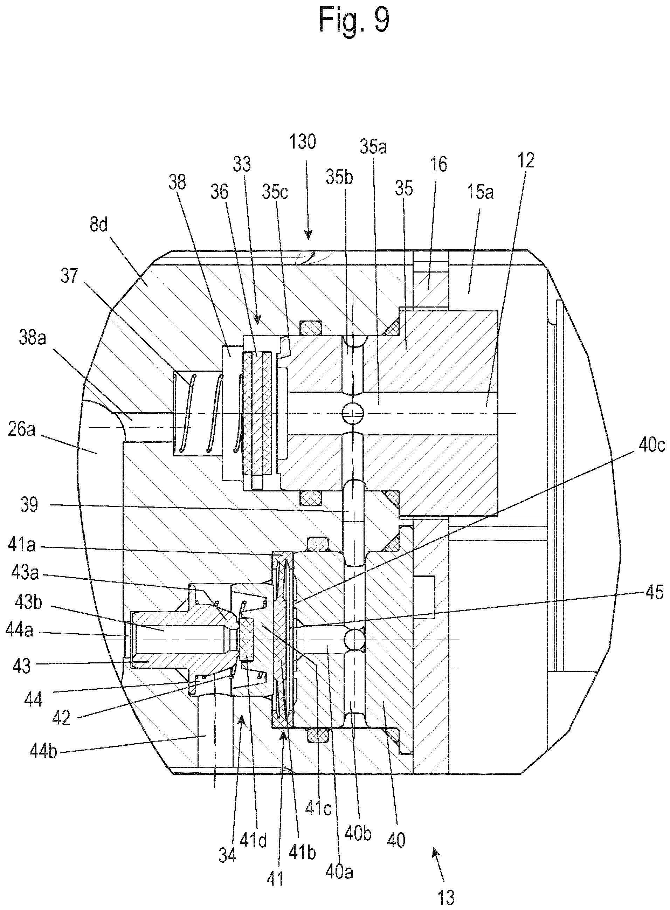

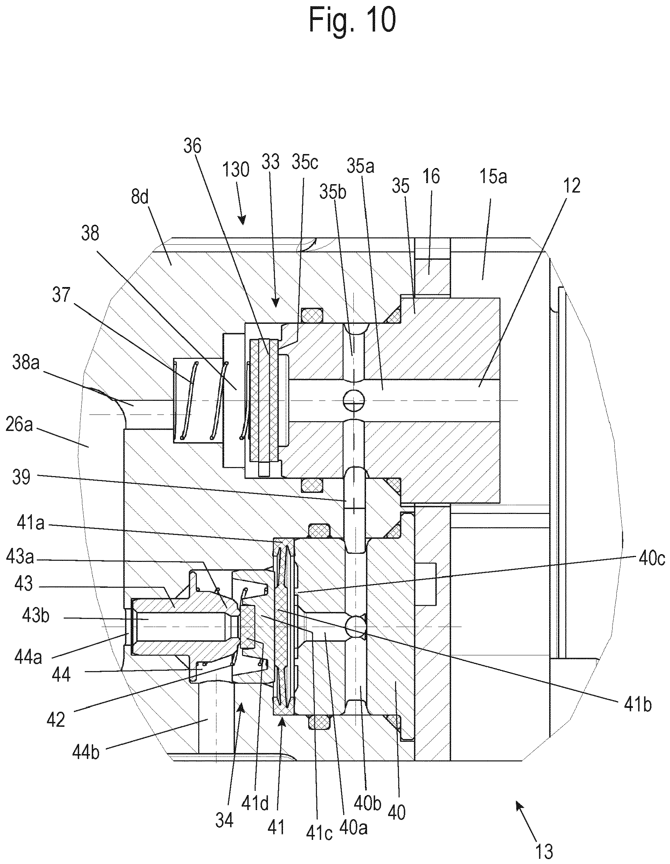

In den **Figuren 8 - 10** sind vergrößerte Schnittansichten der Ventileinrichtung 13 gemäß Ausschnitten VIII, IX und X nach Figur 7 in verschiedenen Zuständen in vergrößerter Darstellung gezeigt. **Figur 8** zeigt einen geschlossenen Zustand des Einlassventils 33 und einen geöffneten Zustand des Entlüftungsventils 34. In **Figur 9** ist das Einlassventil 33 im geöffneten Zustand dargestellt, wobei das Entlüftungsventil 34 geschlossen ist. **Figur 10** stellt das Einlassventil 33 und das Entlüftungsventil 34 jeweils im geschlossenen Zustand dar.

Die Funktion der Ventileinrichtung 13 der Steuerungseinrichtung 130 besteht darin, einerseits den Bremsdruck ungehindert in den Nachstellzylinder 25 einzulassen und andererseits aber beim Lösen der Bremse (= Absenken des Bremsdrucks des Bremszylinders 5a auf Atmosphärendruck) den Nachstellzylinder 25, d.h. den Nachstellerdruckraum 26, den Druckraum 26a und die Verbindung 26b, nur zeitverzögert zu entlüften.

Das Einlassventil 33 umfasst einen Ventilhalter 35 mit dem Nachstelleranschluss 12, ein Ventilelement 36 und eine Ventilfeder 37. Das Einlassventil 33 ist ein einfaches Rückschlagventil, das den Druck aus dem Bremszylinder 5a mit möglichst geringem Verlust in den Nachstellzylinder 25 lässt. Das Einlassventil 33 ist im Ruhezustand geschlossen, wie in Figur 8 gezeigt ist.

Der Ventilhalter 35 ist von der Seite des Nachstellgehäuses 8, welche zum Nachstellerjoch 9 weist, in den Ventilabschnitt 8d, abgedichtet mittels Rundschnurdichtringen, die nicht bezeichnet sind, eingesetzt.

Ein Abschnitt des Ventilhalters 35 mit dem Nachstelleranschluss 12 steht von dem Nachstellergehäuse 8 durch eine Öffnung der Zwischenplatte 16 in Richtung auf das Nachstellerjoch 19 hervor. Der Nachstelleranschluss 12 kommuniziert mit einem Kanal 35a, welcher sich längs durch den ganzen Ventilhalter 35 erstreckt, kommuniziert weiterhin mit einer umlaufenden Nut 35b des Ventilhalters 35 und mündet in einen Ventilsitz 35c, der sich in einen Ventilraum 38 befindet. Der Ventilsitz 35c steht mit dem scheibenförmigen Ventilelement 36 in Kontakt, welches durch eine Ventilfeder 37 gegen den Ventilsitz 35c gedrückt wird und im geschlossenen Zustand des Einlassventils 33 die Mündung des Kanals 35a in den Ventilraum 38 verschließt. Auf diese Weise ist die Rückschlagfunktion des Einlassventils 33 gebildet. Der Ventilraum 38, in dem das Ventilelement 36 und die Ventilfeder 37 angeordnet sind, kommuniziert mit dem Druckraum 26a über einen Einlasskanal 38a.

Die umlaufende Nut 35b des Ventilhalters 35 kommuniziert mit einem Verbindungskanal 39, der in dem Ventilabschnitt 8d eingeformt ist.

In dem in Figur 8 und 10 gezeigten geschlossenen Zustand des Einlassventils 33 ist das Ventilelement 36 mittels der Ventilfeder 37 gegen den Ventilsitz 35c des Ventilhalters 35 gedrückt. Der Kanal 35a des Ventilhalters 35 ist verschlossen. In dem Druckraum 26a befindliche Druckluft kann somit nicht zurück in den Kanal 35a und die damit kommunizierenden Kanäle und Anschlüsse zurückströmen.

Figur 9 zeigt das Einlassventil 33 im geöffneten Zustand. Die am Nachstelleranschluss 12 anstehende Druckluft drückt das Ventilelement 36 gegen die Kraft der Ventilfeder 37 in den Ventilraum 38, wobei die Druckluft aus dem Nachstelleranschluss 12 durch den Einlasskanal 38a in den Druckraum 26a des Nachstellergehäuses 8 des Verschleißnachstellers 7 strömt.

Das Entlüftungsventil 34 umfasst einen Ventilhalter 40 mit einem Kanal 40a und einer umlaufenden Nut 40b, ein Membranelement 41, eine Ventilfeder 42 und einen Düsenkörper 43.

Das Entlüftungsventil 34 ist ein gesteuertes Ventil und ist im Ruhezustand, den Figur 8 zeigt, geöffnet. Es weist dazu einen Steuereingang auf, der unten noch näher beschrieben wird.

Das Entlüftungsventil 34 steuert das Entlüften des Nachstellzylinders 25, d.h. des Nachstelldruckraums 26, des Druckraums 26a und der Verbindung 26b. Dies wird unten noch weiter erläutert.

Der Ventilhalter 40 ist von der Seite des Nachstellgehäuses 8, welche zum Nachstellerjoch 9 weist, in den Ventilabschnitt 8d, mittels Rundschnurdichtringen, die nicht bezeichnet sind, abgedichtet eingesetzt und ist mit der Zwischenplatte 16 abgedeckt.

In dem Ventilhalter 40 erstreckt sich ein zentraler Kanal 40a in der Längsachse des Ventilhalters 40 ab Mitte dieser Längsachse in Richtung zum Druckraum 26a hin etwa über die halbe Länge des Ventilhalters 40 und mündet hinter dem Membranelement 41 in einem Sitzabschnitt 40c. Der Sitzabschnitt 40c umgibt eine Mündung des Kanals 40a ringförmig, aber mit Unterbrechungen, z.B. durch Ausfräsungen. Der Sitzabschnitt 40c bildet keine Dichtfläche, sondern eine Anlagefläche für das Membranelement 41 im geöffneten Zustand des Entlüftungsventils 34 ohne die wirksame Membranfläche des Membranelementes 41 zu reduzieren und steht von dem Ventilhalter 40 in Richtung auf das Membranelement 41 hervor. Der Sitzabschnitt 40c bildet lediglich einen Anschlag für das Membranelement 41, um dessen Auslenkung (Hub) in öffnender Richtung zu begrenzen.

Das Membranelement 41 umfasst einen umlaufenden Außenrand 41a, einen damit elastisch verbundenen zentralen Membranabschnitt 41b, einen auf dem zentralen Membranabschnitt 41 b anliegenden Halter 41c, und ein in dem Halter 41c zentral angeordnetes Ventilelement 41d. Der Halter 41c liegt hier lose auf dem zentralen Membranabschnitt 41b, wird aber von der Ventilfeder 42 oder durch Druckluft gegen den zentralen Membranabschnitt 41b des Membranelementes 41 gedrückt. Es ist auch denkbar, dass der Halter 41c mit dem zentralen Membranabschnitt 41b fest verbunden ist.

Das Membranelement 41 ist mit seinem Außenrand 41a an einem Boden der Bohrung, in welcher der Ventilhalter 40 in den Ventilabschnitt 8d des Nachstellergehäuses 8 eingesetzt ist, angeordnet und wird von dem Ventilhalter 40 dort gehalten.

In dem geöffneten Zustand des Entlüftungsventils 34 liegt der Membranabschnitt 41b des Membranelementes 41 auf dem hervorstehenden Sitzabschnitt 40c des Ventilhalters 40 auf und bildet mit der Mündung des Kanals 40a einen Teilabschnitt eines Steuerdruckraums 45. Der gesamte Steuerdruckraum 45 erstreckt sich in allen Betriebssituationen radial bis zum Außenrand 41a des Membranelementes 41 und ist im geschlossenen Zustand des Entlüftungsventils 34 von dem Membranelement 41 und der zum Ventilraum 44 weisenden Seite des Ventilhalters 40 festgelegt und mit Bremsdruck als Steuerdruck aus dem Nachstelleranschluss 12 beaufschlagt, wie in Figur 9 zu erkennen ist.

Der Halter 41c und das Ventilelement 41d des Membranelementes 41 weisen zum Druckraum 26a und sind in einem Ventilraum 44 angeordnet, in welchem sie aufgrund des elastischen Membranabschnitts 41b axial verschiebbar sind.

Das Membranelement 41 ist durch eine Ventilfeder 42 in Richtung auf den Sitzabschnitt 40c des Ventilhalters 40 vorgespannt. Die Ventilfeder 42 stützt sich mit einem Ende an dem Halter 41c des Membranelementes 41 ab. Das andere Ende der Ventilfeder 42 steht mit einem Kragen des Düsenkörpers 43 in Kontakt, der sich in dem Nachstellergehäuse 8 abstützt.

Der Ventilraum 44 kommuniziert über den Düsenkörper 43 und einen Entlüftungskanal 44a mit dem Druckraum 26a und über einer Entlüftungsöffnung 44b mit der Atmosphäre, wenn das Entlüftungsventil 34 geöffnet ist.

Eine Verbindung zwischen dem Druckraum 26a über den Entlüftungskanal 44a mit dem Ventilraum 44 und mit der Entlüftungsöffnung 44b wird so durch das Entlüftungsventil 34 ermöglicht. Dazu ist der Düsenkörper 43 in den Entlüftungskanal 44a eingesetzt. Ein Düsenkanal 43b verläuft zentral in der Längsachse des Düsenkörpers 43 und kommuniziert sowohl über die Öffnung des Entlüftungskanals 44a mit dem Druckraum 26a als auch mit einer Düsenöffnung 43a des Düsenkörpers 43. Die Düsenöffnung 43a des Düsenkörpers 43 bildet mit dem Dichtelement 41d des Membranelementes 41 das Entlüftungsventil 34.

In dem in Figur 8 gezeigten geöffneten Zustand des Entlüftungsventils 34 ist der Membranabschnitt 41b mit dem Halter 41c und dem Dichtelement 41d mittels der Ventilfeder 42 gegen den Sitzabschnitt 40c des Ventilhalters 40 gedrückt. Die Düsenöffnung 43a des Düsenkörpers 43 ist offen und kommuniziert mit dem Ventilraum 44. Wenn die Düsenöffnung 43a mittels des Dichtelementes 41d des Membranelementes 41 im geschlossenen Zustand des Entlüftungsventils 34 verschlossen ist wie in Figur 9 gezeigt, ist eine Kommunikation von Druckraum 26a mit dem Ventilraum 44 und somit mit der Atmosphäre unterbunden.

Der Kanal 40a des Ventilhalters 40 des Entlüftungsventils 34 kommuniziert mit der umlaufenden Nut 40b des Ventilhalters 40, wobei die umlaufende Nut 40b mit dem Verbindungskanal 39 und somit über die umlaufende Nut 35b und den Kanal 35a des Ventilhalters 35 des Einlassventils 33 mit dem Nachstelleranschluss 12 kommuniziert.

Auf diese Weise ist der Steuereingang des Entlüftungsventils 34 durch den Kanal 40b und die Nut 40b des Ventilhalters 40 gebildet. Das Steuermedium ist das Druckmedium (hier Druckluft), welche als Druckluft für den Bremszylinder 5a benutzt wird und über den Nachstelleranschluss 12, den Kanal 35a und die Nut 35b des Ventilhalters 35 des Einlassventils 33 und den Verbindungskanal 39 durch die Nut 40b und den Kanal 40a des Ventilhalters 40 des Entlüftungsventils 34 das Membranelement 41 mit Druck, d.h. einem Steuerdruck, beaufschlagt.

Über die oben beschriebene Verbindung zwischen dem Nachstelleranschluss 12 und dem Kanal 40a des Ventilhalters 40 des Entlüftungsventils 34 wirkt bei einem Bremsvorgang der im Bremszylinder 5a wirkende Druck auf den federbelasteten Membranabschnitt 41b des Membranelementes 41 und drückt den Membranabschnitt 41b von dem Sitzabschnitt 40c in Richtung auf den Düsenkörper 43. Die entsprechende Kraft wirkt als Schließkraft auf das Entlüftungsventil 34 mit wesentlich kleinerer Fläche. Mit anderen Worten, das Dichtelement 41d wird von dem Membranabschnitt 41 b und von dem auf ihm angeordnete Halter 41c gegen die Düsenöffnung 43a gedrückt und verschließt diese, wobei das Dichtelement 41d seitens der Düsenöffnung 43a mit dem im Druckraum 25a herrschenden Nachstellerdruck (= vorheriger Bremsdruck) belastet ist. Solange der Bremsdruck des Bremszylinders 5a an dem Nachstelleranschluss 12 und somit an dem Membranelement 41 des Entlüftungsventils 34 ansteht, bleibt das Entlüftungsventil 34 geschlossen, und der Druckraum 26a mit Verbindung 26b und dem Nachstellerdruckraum 26 sind zur Atmosphäre verschlossen.

Wird nun der unter Druck stehende Bremszylinder 5a beim Lösen der Bremse entlüftet, so bleibt der Druck im Druckraum 26a mit Verbindung 26b und dem Nachstellerdruckraum 26 im Verschleißnachsteller 7 so lange erhalten, bis die Membrankraft des geringer werdenden Bremsdruckes nicht mehr ausreicht, das Entlüftungsventil 34 gegen den höheren Nachstellerdruck im Druckraum 26a geschlossen zu halten. Unterschreitet der Bremszylinderdruck einen vorher einstellbaren Grenzwert, öffnet das Entlüftungsventil 34 vollständig und der Druckraum 26a mit Verbindung 26b und dem Nachstellerdruckraum 26 im Verschleißnachsteller 7 wird über den nun freien Durchgang vom Entlüftungskanal 44a durch den Ventilraum 44 durch die Entlüftungsöffnung 44b zur Atmosphäre vollständig entlüftet.

Ein weiterer Vorteil besteht darin, dass das gesteuerte Ventil so mittels des gesteuerten Membranelementes 41 so ausgeführt sein kann, dass der Druckverlauf in dem Druckraum 26a versetzt zum Druckverlauf im Bremszylinder 5a der Bremszangeneinheit 1 erfolgt. Erst wenn der Druck im Bremszylinder 5a einen unteren Grenzwert unterschreitet, wird der Druckraum 26a komplett zur Atmosphäre entlüftet. Die Zeit dieses Entlüftens kann ebenfalls durch den Düsenkörper 43 beeinflusst werden.

Der vorher einstellbare Grenzwert (für z.B. Druck, Ausströmmenge) kann z.B. mittels des Düsenkörpers 43 und der Größe seiner Düsenöffnung 43a und/oder mittels der Ventilfeder 42 beeinflusst und somit festgelegt werden. Dies wird als bekannt vorausgesetzt und nicht weiter erläutert.

In dem in Figur 8 gezeigten Zustand der Ventileinrichtung 13 ist der Druckraum 26a des Verschleißnachstellers 7 entlüftet, da der Bremszylinder 5a der Bremszangeneinheit 1 auch entlüftet wurde. Das Einlassventil 33 ist geschlossen, das Entlüftungsventil 34 ist geöffnet, da kein Bremsdruck über den Nachstelleranschluss 12 auf das Membranelement 41 wirkt.

Bei einem Bremsvorgang steigt der Druck im Bremszylinder 5a und über die Nachstellerdruckleitung 11 auch am Einlassventil 33 und an dem Membranelement 41 an. Das Einlassventil 33 öffnet und Druckluft strömt in den Druckraum 26a des Verschleißnachstellers 7 zum Antrieb desselben. Aufgrund des nun an dem Membranelement 41 des Entlüftungsventils 34 anstehenden Bremsdrucks schließt das Entlüftungsventil 34 wie oben beschrieben. Dieser Zustand ist in Figur 9 dargestellt.

Für den Fall, in welchem der Bremszylinderdruck konstant bleibt (während eines Bremsvorgangs) oder beim Lösen der Bremse sinkt, wobei der untere Grenzwert noch nicht erreicht ist, zeigt Figur 10 den zugehörigen Zustand. Das Einlassventil 33 ist geschlossen. Das Entlüftungsventil 34 ist ebenfalls geschlossen, da der an dem Membranelement 41 anstehende Restdruck seitens des Bremszylinders 5a den unteren Grenzwert noch nicht erreicht hat.

Die Ventileinrichtung 13 hält auf diese Weise beim Lösen der Bremse (=Absenken des Bremsdruckes) den Druck im Nachstelldruckraum 26 (natürlich auch im damit verbundenen Druckraum 26a) des Nachstellzylinders 25 länger aufrecht als der Bremsdruck im Bremszylinder 5a wirkt. Ist der Druck im Bremszylinder 5a geringer als zur Überwindung der am Nachstellkolben wirkenden Druckkraft abzüglich der Kraft der Druckfeder 29 erforderlich, kann der Verschleißnachsteller 7 einen aufgetretenen Verschleiß an den Belägen 3, 3' durch Verlängerung nachstellen. Erst dann wird der Verschleißnachsteller 7 zur Atmosphäre entlüftet. Diese Funktionen werden unten noch weiter erläutert.

Wird der Bremszylinder 5a bei einem Zuspannvorgang der Bremszangeneinheit 1 mit Druck beaufschlagt, legt die Bremszangeneinheit 1 an. Gleichzeitig wird der Druck in den Verschleißnachsteller 7 über den Nachstelleranschluss 12 und das Einlassventil 33 über den Druckraum 26a, die Verbindung 26b in den Nachstellerdruckraum 26 geleitet.

Die Kraft des Bremszylinders 5a bewirkt wie oben beschrieben über die Zangenhebel 2, 2' eine Axialkraft auf den Verschleißnachsteller 7, welche der Nachstellzylinder 25 bei gleichem Druck nicht überwinden kann. Die Länge des Verschleißnachstellers 7, d.h. der Abstand S, ändert sich daher nicht.

Wird die Bremszangeneinheit 1 gelöst, wird der Nachstellzylinder 25 des Verschleißnachstellers 7 mittels des Entlüftungsventils 34 wesentlich langsamer entlüftet als der Bremszylinder 5a. Dann erfährt der Verschleißnachsteller 7 keine durch den Bremszylinder 5a bewirkte Axialkraft mehr, und der Nachstellkolben 24 kann die Bremsbeläge 3, 3' auf Anlage an der Bremsscheibe 4 halten, bis der Bremszylinder 5a seine Lösestellung erreicht hat. Dabei wird die Druckmutter 28 zusammen mit dem Zahnring 27 um das Einstellmaß "e" verschoben, bis der Zahnring 27 an der Innenseite des ersten Stirnwandrings 15b anliegt. Dieses entspricht dem Soll-Belagspiel, d.h. dem Soll-Lüftspiel zwischen Bremsbelägen 3, 3' und Bremsscheibe 4. Wenn der Nachstellzylinder 25 weiter entlüftet wird, werden der Zahnring 27 und die mit ihm über die Verzahnung 30, 31 in Eingriff stehende Druckmutter 28 durch die Federkraft der Druckfeder 29 um das Einstellmaß "e" wieder zurückgeschoben (in Richtung auf das Nachstellergehäuse 8), bis der Zahnring 27 an der Zwischenplatte 16 zur Anlage kommt. Damit ist das Lüftspiel zwischen Bremsbelägen 3, 3' und Bremsscheibe 4 wieder hergestellt.

Hat ein Verschleiß (der Bremsbeläge 3, 3' und auch der Bremsscheibe 4) stattgefunden, oder war das aktuelle Lüftspiel vor dem Bremsvorgang zu groß, wird beim Lösen der Bremszangeneinheit 1 zunächst die Druckmutter 28 in Richtung auf das Nachstellerjoch 9 weiter geschoben, da der Nachstellerdruckraum 26 noch nicht entlüftet ist und der Druck im Nachstellerdruckraum 26 den Nachstellkolben 24 und die mit ihm verbundene Spindel 18 in Richtung Nachstellerjoch 9 drückt. Während des Verschiebewegs von Zahnring 27 und Druckmutter 28 längs des Einstellwegs "e" stehen die Verzahnungen 30 und 31 in Eingriff. Der Zahnring 27 ist verdrehgesichert, daher kann sich die Druckmutter 28 auf dem Außengewinde 18e der Spindel 18 bei der Längsbewegung der Spindel 18 nicht verdrehen.

Bei weiterer Längsbewegung der Spindel 18 bleibt der Zahnring 27 auf Anlage an der ersten Stirnwandrings 15b an stehen. Die Zahnkupplung bzw. Verzahnung 30, 31 von Zahnring 27 und Druckmutter 28 kommt nun dabei außer Eingriff, und die Druckmutter 28 kann sich durch die Federkraft der Druckfeder 29 entsprechend Verschleiß auf dem Außengewinde 18e der Spindel 18 verdrehen und nachfassen, d.h. wieder in Eingriff mit dem Zahnring 27 kommen.

Eine Drehbewegung der Druckmutter 28 relativ zu der drehfesten Druckfeder 29 wird durch ein Axiallager 29a zwischen Druckmutter 28 und dem an der Druckmutter 28 angeordneten Ende der Druckfeder 29 ermöglicht.

Solange der Druck des Bremszylinders 5a, der wie oben beschrieben an dem Nachstelleranschluss 12 ansteht, einen bestimmten unteren Grenzwert nicht unterschritten hat, bleibt das Entlüftungsventil 34 geschlossen. Dies ist durch die Kommunikation des Membranelementes 41 über den Kanal 40b, die umlaufende Nut 40a des Ventilhalters 40 des Entlüftungsventils 34, die Verbindung 39 und die umlaufende Nut 35a des Ventilhalters 35 des Einlassventils 33 ermöglicht. Auf diese Weise wird das Membranelement 41 des Entlüftungsventils 34 auch mit dem Bremszylinderdruck beaufschlagt und bleibt geschlossen.

Ist der Druck des Bremszylinders 5a unter den bestimmten unteren Grenzwert gefallen, öffnet sich das Entlüftungsventil 34 vollständig. Dabei wird der Druckraum 26a des Nachstellzylinders 25 das Entlüftungsventil 34 mit dem Ventilraum 44 und der Entlüftungsöffnung 44b mit der Atmosphäre verbunden und der Verschleißnachsteller 7 kann sich - angetrieben von der Druckfeder 29 der Druckmutter 28 um das Einstellmaß "e" verkürzen. Dabei werden dann die Bremsbeläge 3, 3' von der Bremsscheibe 4 um das Lüftspiel abgehoben.

Wenn die Bremszangeneinheit 1 ein wesentlich zu großes Lüftspiel aufweist und in diesem Fall dabei betätigt wird, z.B. nach einem Wechsel der Bremsbeläge 3, 3', so verlängert sich der Verschleißnachsteller 7 bereits beim ersten Bremsvorgang, bis die Bremsbeläge 3, 3' an der Bremsscheibe 4 anliegen. Wird die Bremszangeneinheit 1 wieder gelöst, verlängert sich der Verschleißnachsteller 7 um einen weiteren Betrag, der dem gesamten Belaghub reduziert um das Belagspiel (Lüftspiel) entspricht. Mit dieser Funktion wird der Verschleißnachsteller 7 auch "Sprungsteller" genannt.

Für die Funktion des Verschleißnachstellers 7 ist nur eine Nachstellerdruckleitung 11 vom Bremszylinder 5a zum Nachstellzylinder 25, d.h. zum Nachstelleranschluss 12 am Nachstellergehäuse 8, erforderlich. Diese kann platzsparend und auch vergleichsweise kostengünstig ausgeführt werden. Die kurze und platzsparende Nachstellerdruckleitung 11 ist aus Figur 4 deutlich erkennbar.

Die Erfindung ist durch das oben angegebene Ausführungsbeispiel nicht eingeschränkt, sondern im Rahmen der Ansprüche modifizierbar.

So ist z.B. denkbar, dass der Bremsdruck für den Antrieb des Verschleißnachstellers 7 über die Nachstellerleitung 11 direkt aus der Druckleitung des Bremszylinders 5a abgezweigt und dem Nachstellzylinder 25 der Verschleißnachstellers zugeführt wird.

### Bezugszeichenliste

- 1: Kompakt-Bremszangeneinheit
- 2,2': Zangenhebel
- 2a, 2'a; 2b, 2'b: Hebelabschnitt
- 2c, 2'c; 2d, 2'd: Hebelende
- 2'e: Verbinder
- 3,3': Bremsbelag
- 3a, 3'a: Bremsbelaghalter
- 4: Bremsscheibe
- 5: Krafterzeuger
- 5a: Bremszylinder
- 5b: Antriebsarm
- 5c: Bolzen
- 5d: Exzenterantrieb
- 6,6': Hebelschwenkachse
- 6a, 6'a; 6b, 6'b: Schwenkachse
- 7: Verschleißnachsteller
- 7a: Nachstellerachse
- 8: Nachstellergehäuse
- 8a, 8b: Befestigungsabschnitt
- 8c: Stirnwand
- 8d: Ventilabschnitt
- 9: Nachstellerjoch
- 9a, 9b: Befestigungsabschnitt
- 9c: Ausnehmung
- 10: Druckleitungsanschluss
- 11: Nachstellerdruckleitung
- 11a: Bremszylinderanschluss
- 11b, 11c: Verbindung
- 12: Nachstelleranschluss
- 13: Ventileinrichtung
- 14: Rückhubbegrenzer
- 15: Rückhubbegrenzergehäuse
- 15a: Basis
- 15b, 15d, 15f: Stirnwandring
- 15c, 15e: Gehäuseabschnitt
- 15g: Kragen
- 15h: Ausnehmung
- 16: Zwischenplatte
- 16a: Durchgangsbohrung
- 17: Rückstellsechskant
- 18: Spindel
- 18a: Rückstellende
- 18b: Rückstellverzahnung
- 18c: Wellenabschnitt
- 18d: Kolbenende
- 18e: Außengewinde
- 19: Faltenbalg
- 20: Lagerbuchse
- 21: Befestigung
- 22: Dichtung
- 23: Axialfeder
- 23a: Axialsicherung
- 24: Nachstellkolben
- 25: Nachstellzylinder
- 25a: Zylinderlaufbuchse
- 26: Nachstellerdruckraum
- 26a: Druckraum
- 26b: Verbindung
- 27: Zahnring
- 27a: Feder
- 27b: Aufnahme
- 28: Druckmutter
- 29: Druckfeder
- 29a: Axiallager
- 30, 31: Verzahnung
- 32: Befestigungselement
- 33: Einlassventil
- 34: Entlüftungsventil
- 35: Ventilhalter
- 35a: Kanal
- 35b: Nut
- 35c: Ventilsitz
- 36: Ventilelement
- 37: Ventilfeder
- 38: Ventilraum
- 38a: Einlasskanal
- 39: Verbindungskanal
- 40: Ventilhalter
- 40a: Kanal
- 40b: Nut
- 40c: Sitzabschnitt
- 41: Membranelement
- 41a: Außenrand
- 41b: Membranabschnitt
- 41c: Halter
- 41d: Dichtelement
- 42: Ventilfeder
- 43: Düsenkörper
- 43a: Ventilöffnung
- 43b: Düsenkanal
- 44: Ventilraum
- 44a: Entlüftungskanal
- 44b: Entlüftungsöffnung
- 45: Steuerdruckraum
- 130: Steuerungseinrichtung

- e: Einstellmaß
- A, U: Ansicht
- S: Abstand

## Patentansprüche

1. Verschleißnachsteller (7) einer Kompakt-Bremszangeneinheit (1), insbesondere für Schienenfahrzeuge, aufweisend ein Nachstellergehäuse (8), ein Nachstellerjoch (9), einen Gewindetrieb mit einer Spindel (18) und einer auf der Spindel (18) verschraubbaren Druckmutter (28),
**dadurch gekennzeichnet, dass**
der Verschleißnachsteller (7) als ein pneumatischer Verschleißnachsteller (7) ausgebildet ist und eine Steuerungseinrichtung (130) eines Nachstellzylinders (25) des Verschleißnachstellers (7) aufweist, wobei die Steuerungseinrichtung (130) eine Ventileinrichtung (13) umfasst.

2. Verschleißnachsteller (7) nach Anspruch 1, **dadurch gekennzeichnet, dass** die Ventileinrichtung (13) ein Einlassventil (33) für ein Druckmedium, vorzugsweise Druckluft, und ein gesteuertes Entlüftungsventil (34) umfasst.

3. Verschleißnachsteller (7) nach einem der vorhergehenden Ansprüche, **dadurch gekennzeichnet, dass** das Einlassventil (33) und das gesteuerte Entlüftungsventil (34) mit dem Druckmedium beaufschlagbar sind, wobei ein Druck des Druckmediums einen Steuerdruck für das gesteuerte Entlüftungsventil (34) bildet.

4. Verschleißnachsteller (7) nach einem der vorhergehenden Ansprüche, **dadurch gekennzeichnet, dass** das Einlassventil (33) als ein Rückschlagventil ausgebildet ist und einen Ventilhalter (35) mit einem Nachstelleranschluss (12) für das Druckmedium, ein Ventilelement (36) und eine Ventilfeder (37) aufweist.

5. Verschleißnachsteller (7) nach Anspruch 4, **dadurch gekennzeichnet, dass** das Einlassventil (33) zwischen dem Nachstelleranschluss (12) für das Druckmedium und einem Nachstellerdruckraum (26) des Nachstellzylinders (25) angeordnet ist.

6. Verschleißnachsteller (7) nach Anspruch 5, **dadurch gekennzeichnet, dass** zwischen dem Nachstellerdruckraum (26) des Nachstellzylinders (25) ein mit dem Nachstellerdruckraum (26) kommunizierender Druckraum (26a) angeordnet ist, welcher mit dem Einlassventil (33) kommuniziert.

7. Verschleißnachsteller (7) nach einem der Ansprüche 4 bis 6, **dadurch gekennzeichnet, dass** der Nachstelleranschluss (12) mit einem Kanal (35a), welcher sich längs durch den ganzen Ventilhalter (35) des Einlassventils (33) erstreckt, kommuniziert, wobei der Kanal (35a) mit einer umlaufenden Nut (35b) des Ventilhalters (35) kommuniziert und in einen Ventilsitz (35c) des Einlassventils (33) mündet.

8. Verschleißnachsteller (7) nach einem der vorhergehenden Ansprüche, **dadurch gekennzeichnet, dass** das Entlüftungsventil (34) einen Ventilhalter (40) mit einem Kanal (40a) und einer umlaufenden Nut (40b), ein Membranelement (41), eine Ventilfeder (42) und einen Düsenkörper (43) umfasst.

9. Verschleißnachsteller (7) nach Anspruch 8, **dadurch gekennzeichnet, dass** der Kanal (40a) und die umlaufende Nut (40b) des Ventilhalters (40) des Entlüftungsventils (34) miteinander kommunizieren und mit dem Membranelement (41) zusammenwirken, wobei der Kanal (40a) und die umlaufende Nut (40b) einen Steuereingang des gesteuerten Entlüftungsventils (34) bilden.

10. Verschleißnachsteller (7) nach Anspruch 9, **dadurch gekennzeichnet, dass** die umlaufende Nut (40b) des Ventilhalters (40) des Entlüftungsventils (34) als Steuereingang des Entlüftungsventils (34) mit der umlaufenden Nut (35b) und mit dem Kanal (35a) des Ventilhalters (35) kommunizieren.

11. Verschleißnachsteller (7) nach einem der Ansprüche 8 bis 10, **dadurch gekennzeichnet, dass** das Membranelement (41) einen umlaufenden Außenrand (41a), einen damit elastisch verbundenen zentralen Membranabschnitt (41b), einen auf dem zentralen Membranabschnitt (41b) wirkenden Halter (41c), und ein in dem Halter (41c) zentral angeordnetes Ventilelement (41d) umfasst, wobei der Halter (41c) und das Ventilelement (41d) des Membranelementes (41) in einem Ventilraum (44) angeordnet sind, in welchem sie aufgrund des elastischen Membranabschnitts (41b) axial verschiebbar sind.

12. Verschleißnachsteller (7) nach Anspruch 11, **dadurch gekennzeichnet, dass** das Membranelement (41) axial durch die Ventilfeder (42) in Richtung auf den Ventilhalter (40) vorgespannt ist.

13. Verschleißnachsteller (7) nach Anspruch 11 oder 12, **dadurch gekennzeichnet, dass** der Ventilraum (44) über den Düsenkörper (43) und einen Entlüftungskanal (44a) mit dem Druckraum (26a) und über eine Entlüftungsöffnung (44b) mit der Atmosphäre kommuniziert, wenn das Entlüftungsventil (34) geöffnet ist, wobei eine Kommunikation von Druckraum (26a) mit dem Ventilraum (44) und somit mit der Atmosphäre unterbunden ist, wenn das Entlüftungsventil (34) geschlossen ist.

14. Verschleißnachsteller (7) nach einem der Ansprüche 8 bis 13, **dadurch gekennzeichnet, dass** der Düsenkörper (43) in den Entlüftungskanal (44a) eingesetzt ist und einen Düsenkanal (43b), der mit dem Druckraum (26b) kommuniziert, und eine Düsenöffnung (43a) aufweist, wobei das Dichtelement (41d) des Membranelementes (41) mit der Düsenöffnung (43a) des Düsenkörpers (43) derart zusammenwirkt, dass die Düsenöffnung (43b) durch das Dichtelement (41d) des Membranelementes (41) verschlossen ist, wenn das Entlüftungsventil (34) geschlossen ist, und dass die Düsenöffnung (43b) mit dem Ventilraum (44) kommuniziert, wenn das Entlüftungsventil (34) geöffnet ist.

15. Verschleißnachsteller (7) nach einem der vorhergehenden Ansprüche, **dadurch gekennzeichnet, dass** die Ventileinrichtung (13) in einem Ventilabschnitt (8d) des Nachstellergehäuses (8) angeordnet ist.

16. Verschleißnachsteller (7) nach einem der Ansprüche 1 bis 14, **dadurch gekennzeichnet, dass** die Ventileinrichtung (13) als separate Baugruppe außerhalb des Nachstellergehäuses (8) in der Nachstellerdruckleitung angeordnet ist.

17. Verschleißnachsteller (7) nach Anspruch 11, **dadurch gekennzeichnet, dass** der Nachstellzylinder (25) mit dem gleichen Druckmedium beaufschlagbar ist, mit dem ein Bremszylinder (5a) einer Bremszangeneinheit (1), welcher der Verschleißnachsteller (7) zuzuordnen ist, beaufschlagt ist.

18. Verschleißnachsteller (7) nach einem der vorhergehenden Ansprüche, **dadurch gekennzeichnet, dass** der Verschleißnachsteller (7) weiterhin mit einem Rückhubbegrenzer (14) ausgebildet ist.

19. Kompakt-Bremszangeneinheit (1) einer pneumatischen Scheibenbremse, insbesondere für Schienenfahrzeuge, aufweisend zwei Zangenhebel (2, 2'), einen Bremszylinder (2a), Bremsbeläge (3, 3') und einen Verschleißnachsteller (7),
**dadurch gekennzeichnet, dass**
der Verschleißnachsteller (7) als ein pneumatischer Verschleißnachsteller (7) mit einer Steuerungseinrichtung (130) ausgebildet ist, wobei die Steuerungseinrichtung (130) eine Ventileinrichtung (13) mit einem Einlassventil (33) und einem gesteuerten Auslassventil (34) aufweist, welche einen Nachstellzylinder (25) mit dem Druckmedium des Bremszylinders (5a) als Antrieb des Verschleißnachstellers (7) steuern.

20. Kompakt-Bremszangeneinheit (1) nach Anspruch 19,
**dadurch gekennzeichnet, dass**
der Verschleißnachsteller (7) nach einem der Ansprüche 1 bis 17 ausgebildet ist.
